# EUROPEAN PATENT APPLICATION

(11) **EP 4 641 973 A1**
(43) Date of publication of application: **29.10.2025**
(21) Application number: 25315125.2
(22) Date of filing: 08.04.2025
(51) Int. Cl.: H04L 9/32

(54) **METHOD OF OPERATING ELECTRONIC DEVICES IN AN AUTOMOTIVE COMMUNICATION NETWORK, AND CORRESPONDING DEVICES**

(30) Priority: 22.04.2024 IT 202400009109
(71) Applicant: STMicroelectronics International N.V., 1228 Plan-les-Ouates, Geneva (CH)
(72) Inventor: Occhipinti, Aldo, 95027 SAN GREGORIO DI CATANIA (CT) (IT); Torrisi, Giovanni Luca, 95022 ACI CATENA (CT) (IT); Schalck-Schmitt, Jean-Paul, 38500 VOIRON (FR); Lapeyre, Jean-Paul, 38140 CHARNECLES (FR)
(74) Representative: Buzzi, Notaro & Antonielli d'Oulx S.p.A.

(57) **Abstract**

A method of operating an automotive communication network is disclosed. A communication commander device (32) sends (701) a request message (REQ). A communication responder device (30) receives (702) the request message, generates (703) a first code (CODE(i)) of a sequence of codes, scrambles (703) the first code with a first cryptographic key fetched (703) from a non-volatile memory (566) to generate a corresponding first scrambled code (SCRAMB_CODE(i)), sends (704) a response message including the first scrambled code, and generates (705) a subsequent code (CODE (i+1)) of the sequence of codes as a function of the first code. The commander receives (706) the response message, descrambles (707) the first scrambled code with a second cryptographic key fetched (707) from a non-volatile memory (422) to generate a corresponding first unscrambled code (UNSCRAMB_CODE(i)), generates (708) a subsequent unscrambled code (UNSCRAMB_CODE(i+1)) as a function of the first unscrambled code, and sends (709) a further message including the subsequent unscrambled code. The first and second cryptographic keys are the same. The sequential code generators of the commander and the responder implement the same code generation rules. The responder receives (710) the further message and compares (711) the subsequent unscrambled code to the subsequent code. If the subsequent unscrambled code and the subsequent code are equal, the commander gets access (712) to the functional registers of the responder. Otherwise, the commander is denied access (713) to the functional registers of the responder.

## Description

### Technical field

The description relates to a method of operating electronic devices in an automotive communication network, in particular a zone-oriented network, and to corresponding electronic devices configured to operate in such a communication network (e.g., a commander device and a responder device configured to communicate according to a commander-responder communication scheme) .

The automotive network may operate, for instance, according to a Controller Area Network (CAN) protocol, such as a CAN FD protocol or a CAN FD Light protocol.

### Technological background

The electrical and electronic (E/E) architecture of vehicles has been evolving significantly in recent years. Document V. Bandur, G. Selim, V. Pantelic and M. Lawford, "Making the Case for Centralized Automotive E/E Architectures," in IEEE Transactions on Vehicular Technology, vol. 70, no. 2, pp. 1230-1245, Feb. 2021, doi: 10.1109/TVT.2021.3054934 provides an overview of such a technological trend. Similarly, document H. Askaripoor, M. Hashemi Farzaneh and A. Knoll, "E/E Architecture Synthesis: Challenges and Technologies," in Electronics 2022, 11(4), 518, doi: 10.3390/electronics11040518 is exemplary of the prior art in this field.

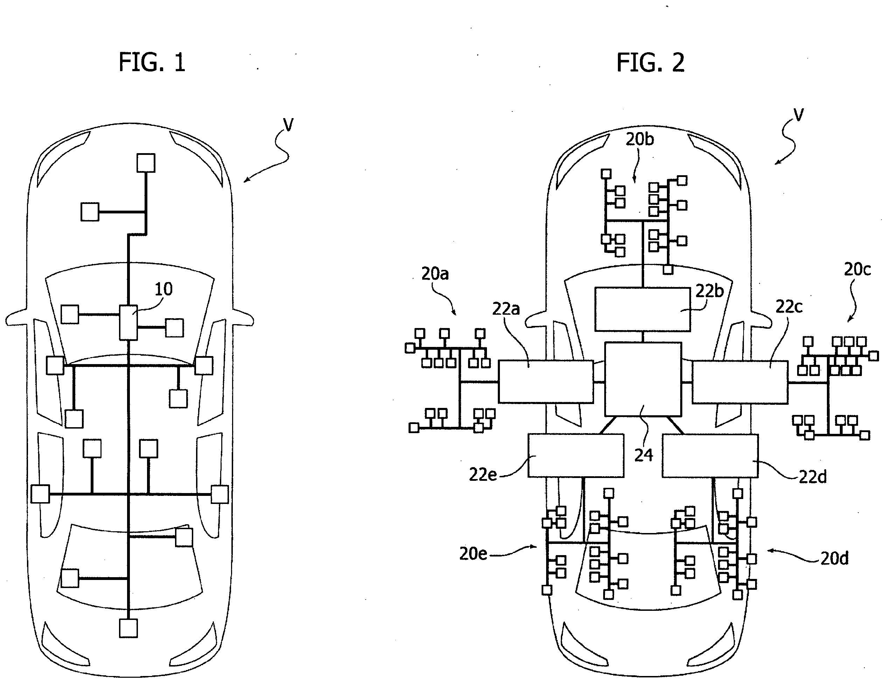

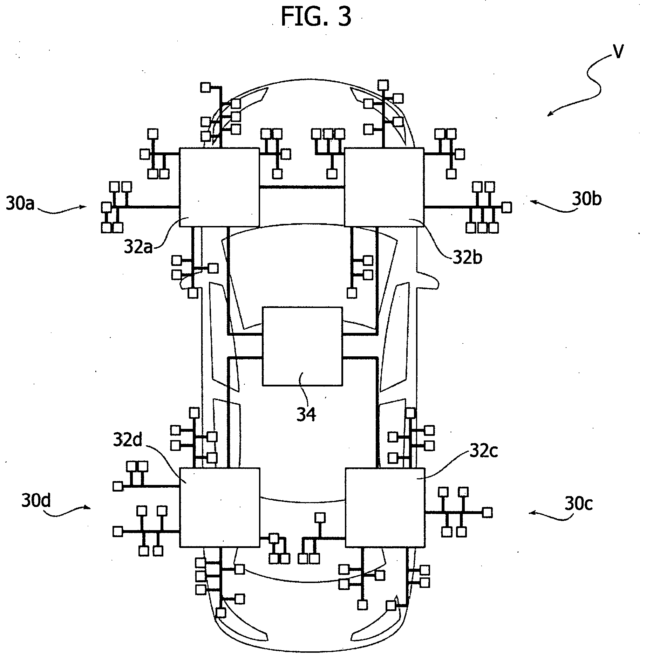

Substantially, the E/E architecture of vehicles has changed over the years from a flat or distributed architecture (as exemplified by the communication network scheme of Figure 1) to a domain-oriented architecture (as exemplified by the communication network scheme of Figure 2), and is now shifting towards a zone-oriented architecture (as exemplified by the communication network scheme of Figure 3). The main factors that drive the evolution of the E/E architecture are: the evolution of computation power (increasing computation power leads to consolidation; application separation by hardware hypervisor); the evolution of the car network (high bandwidth networks connect processors); the evolution of the architecture (increased computation power and high bandwidth interconnects shape the car architecture towards domain-oriented and zone-oriented architecture); and the willingness for a reduction of the Total Cost of Ownership (TCO) without degradation of overall performance.

As exemplified in Figure 1, a flat E/E network of a vehicle V includes a plurality of electronic control units (ECUs) positioned at different locations of the vehicle and coupled to each other via a communication network (bus) and, optionally, a central gateway 10. Each of the ECUs includes a processing unit and/or driver units and carries out respective operations (e.g., sensing from sensors and/or actuating actuators).

As exemplified in Figure 2, a domain-oriented E/E network of a vehicle V also includes a plurality of electronic control units (ECUs) positioned at different locations of the vehicle. The various ECUs are logically (and not necessarily physically) grouped in different groups (or domains) of ECUs, where the ECUs pertaining to a same group carry out operations relating to a same domain of functions. For instance, ECUs in a first group 20a may be configured to control the drivetrain functions, ECUs in a second group 20b may be configured to control the connectivity functions, ECUs in a third group 20c may be configured to control the infotainment functions, ECUs in a fourth group 20d may be configured to control the functions related to advanced driver assistance systems (ADAS) or autonomous driving (AD) systems, and ECUs in a fifth group 20e may be configured to control the body and comfort functions. In the present description, the ECUs 20a to 20e may also be collectively or singularly referred to as ECUs 20. The ECUs in a same group (or domain) are coupled to each other via a dedicated network that is coupled to a respective domain controller (e.g., a drivetrain controller 22a for domain 20a, a connectivity controller 22b for domain 20b, an infotainment controller 22c for domain 20c, an ADAS/AD controller 22d for domain 20d, and a body/comfort controller 22e for domain 20e). In the present description, the domain controllers 22a to 22e may also be collectively or singularly referred to as domain controllers 22. The domain controllers are coupled to each other via a central gateway 24 for exchanging signals (e.g., data). Since the ECUs pertaining to a same domain may be physically distributed at different locations of the vehicle V (e.g., an ECU managing a front camera may be located at the front of the vehicle, and an ECU managing a rear camera may be located at the rear of the vehicle), the communication network of each domain may turn out to be complicated and involve a complex and/or costly harness.

As exemplified in Figure 3, a zone-oriented E/E network of a vehicle V also includes a plurality of electronic control units (ECUs) positioned at different locations of the vehicle. The various ECUs are physically grouped in different groups (or clouds) of ECUs, and the ECUs pertaining to the same group are physically located in the same region or zone of the vehicle V. For instance, ECUs in a first group 30a may be located in the front left area of vehicle V, ECUs in a second group 30b may be located in the front right area of vehicle V, ECUs in a third group 30c may be located in the rear right area of vehicle V, and ECUs in a fourth group 30d may be located in the rear left area of vehicle V. In the present description, the ECUs 30a to 30d may also be collectively or singularly referred to as ECUs 30. The ECUs in the same group may perform functions relating to different domains, e.g., each of groups 30a to 30d may include different ECUs that control the drivetrain functions, the connectivity functions, the infotainment functions, the ADAS/AD functions, the body/comfort functions, and so on. In the present description, such ECUs may also be referred to as "smart nodes" or "smart node devices". The ECUs in the same group are coupled to each other via a dedicated zonal network (possibly with the ECUs pertaining to different domains being arranged and coupled via dedicated sub-networks, as exemplified in Figure 3). Each zonal network is coupled to a respective zonal gateway or zonal controller (e.g., a front left gateway 32a for zone 30a, a front right gateway 32b for zone 30b, a rear right gateway 32c for zone 30c, and a rear left gateway 32d for zone 30d) that controls operation of the smart nodes connected thereto. In the present description, the zonal gateways 32a to 32d may also be collectively or singularly referred to as zonal gateways 32. Each zonal network may operate according to a CAN protocol, such as a CAN FD or CAN FD Light protocol. Each smart node 30 may thus be understood as a satellite ECU located close to one or more electrical loads that need actuation (e.g., motors, LEDs, heaters and the like) and/or close to one or more sensors. Each smart node 30 communicates with a control entity (e.g., a zonal gateway) by means of a commander-responder protocol, which can be implemented, for instance, via a CAN FD Light communication. By way of example, a door control unit (DCU) is an ECU usually located inside a door of the vehicle, which includes the electronics needed to control the electrical loads typically located in the door (e.g., locks, window lift motor, mirror motor, mirror heater, electrochromic mirror glass, and the like). The zonal controllers 32a to 32d are coupled to each other via a central control unit 34 (or plural central control units).

In order to enable many of the functions available in modern vehicles (e.g., front and rear lighting effects, door zone functions, power trunk, etc.) the electronic communication relies on the provision of microcontrollers (MCU) and software for high dynamics and safety. In particular, the current trend towards the use of zone-oriented E/E networks leads to concentrate the control of parts of the vehicle in the zonal gateways (see, e.g., gateways 32a to 32d in Figure 3), which can be implemented as processors with high computational performance that incorporate the main controls of the different parts of the vehicle (e.g., from DCU to engine management, suspension or braking systems). Therefore, zone-oriented E/E networks are also often referred to as "network-driven architectures" insofar as operation of the satellite ECUs 30 is driven by control messages received, via the zonal network, from a respective zonal gateway 32.

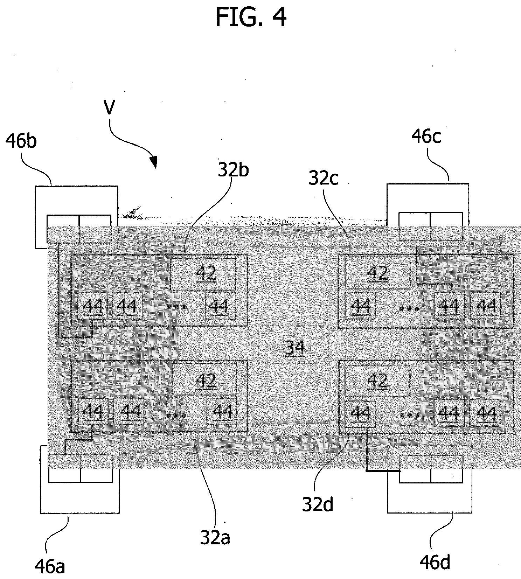

In this respect, a network-driven E/E architecture is also exemplified in Figure 4, with specific reference to the arrangement of door modules or door smart nodes. Here again, a central control unit 34 (acting as a "central brain") is coupled to a front left gateway 32a, a front right gateway 32b, a rear right gateway 32c, and a rear left gateway 32d. Each zonal gateway 32 includes a respective zonal microcontroller unit (MCU) 42, and one or more physical (PHY) transceivers. Each PHY transceiver 42 may be coupled to a sub-network of smart nodes 30 (see, e.g., again Figure 3), or to a single smart node 30. For instance, as exemplified in Figure 4, a transceiver of the front left gateway 32a may be coupled to a respective (left) front door smart node 46a, a transceiver of the front right gateway 32b may be coupled to a respective (right) front door smart node 46b, a transceiver of the rear right gateway 32c may be coupled to a respective (right) rear door smart node 46c, and a transceiver of the rear left gateway 32d may be coupled to a respective (left) rear door smart node 46d. Each door smart node 46 may include a respective transceiver for coupling to the zonal gateway, and one or more drivers for controlling one or more actuators located in the door zone (e.g., all the actuators of the respective door zone).

The interconnections between the processors (e.g., the zonal gateways 32a to 32d) and the other nodes of the vehicle (e.g., the ECUs in groups 30a to 30d, such as the door smart nodes 46), given the possibility of connecting the vehicle to the outside world via the internet, can lend themselves to possible dangerous external attacks to the security of the vehicle itself.

Therefore, there is a need in the art to provide improved ways of operating the electronic devices (e.g., processors and smart nodes) in an automotive communication network (in particular, a zone-oriented network, where the smart nodes are network-driven) which implement new security mechanisms to prevent malicious attacks from external users.

### Object and summary

An object of one or more embodiments is to contribute in providing such improved methods of operating the electronic devices in an automotive zone-oriented communication network, as well as corresponding communication commander devices and communication responder devices.

According to one or more embodiments, such an object can be achieved by a method having the features set forth in the claims that follow.

One or more embodiments may relate to a corresponding communication commander device.

One or more embodiments may relate to a corresponding communication responder device.

The claims are an integral part of the technical teaching provided herein in respect of the embodiments.

According to an aspect of the present description, a method of operating electronic devices in an automotive communication network that includes a communication commander device and at least one communication responder device includes:
- sending a request message from the communication commander device via the communication network, wherein the request message is addressed to a selected communication responder device;
- receiving the request message at the selected communication responder device;
- generating, with a sequential code generator of the selected communication responder device, a first code of a sequence of codes;
- fetching, from a non-volatile memory of the selected communication responder device, a first cryptographic key and scrambling, with a scrambler circuit of the selected communication responder device, the first code with the first cryptographic key to generate a corresponding first scrambled code;
- sending a response message including the first scrambled code from the selected communication responder device to the communication commander device;
- generating, with the sequential code generator of the selected communication responder device, a subsequent code of the sequence of codes as a function of the first code;
- receiving the response message at the communication commander device;
- fetching, from a non-volatile memory of the communication commander device, a second cryptographic key equal to the first cryptographic key and de-scrambling, with a scrambler circuit of the communication commander device, the first scrambled code with the second cryptographic key to generate a corresponding first unscrambled code;
- generating, with a sequential code generator of the communication commander device, a subsequent unscrambled code of the sequence of codes as a function of the first unscrambled code, wherein the sequential code generator of the communication commander device implements the same code generation rules of the sequential code generator of the selected communication responder device;
- sending a further message including the subsequent unscrambled code from the communication commander device to the selected communication responder device;
- receiving the further message at the selected communication responder device;
- comparing, at the selected communication responder device, the subsequent unscrambled code to the subsequent code;
- in response to the subsequent unscrambled code and the subsequent code being equal, giving the communication commander device access to one or more functional registers of the selected communication responder device; and
- in response to the subsequent unscrambled code and the subsequent code being different, denying the communication commander device access to the one or more functional registers of the communication responder device.

One or more embodiments may thus provide the possibility of securing the communication between a smart node and a zonal controller in a zone-oriented (network-driven) E/E architecture.

Optionally, the method may further comprise increasing the count value of an error counter of the selected communication responder device in response to the subsequent unscrambled code and the subsequent code being different.

Optionally, the method may further comprise checking whether the count value of the error counter reaches a threshold value and, in the affirmative case, switching operation of the selected communication responder device to a state where the selected communication responder device does not accept incoming request messages.

Optionally, the method may be carried out once as a handshake procedure at the start of communication between the communication commander device and the selected communication responder device.

Optionally, the method may be carried out periodically during communication between the communication commander device and the selected communication responder device.

Optionally, the automotive communication network may be configured to operate according to a CAN protocol, optionally a CAN FD protocol or a CAN FD Light protocol, and the messages exchanged over the automotive communication network may be formatted according to a CAN message format, optionally a CAN FD message format or a CAN FD Light message format.

Optionally, the method steps carried out by the communication commander device may be executed by a microcontroller unit of the communication commander device, and the method steps carried out by the selected communication responder device may be executed by a hardware logic circuit of the selected communication responder device.

According to another aspect of the present description, a communication commander device is configured for coupling to an automotive communication network and includes a microcontroller unit configured to:
- send, via the communication network, a request message addressed to a selected communication responder device coupled to the automotive communication network;
- receive, via the communication network, a response message generated by the selected communication responder device, the response message including a first scrambled code;
- fetch, from a non-volatile memory of the communication commander device, a cryptographic key and de-scramble the first scrambled code with the cryptographic key to generate a corresponding first unscrambled code;
- generate a subsequent unscrambled code as a function of the first unscrambled code; and
- send a further message including the subsequent unscrambled code to the selected communication responder device.

According to another aspect of the present description, a communication responder device is configured for coupling to an automotive communication network and includes a hardware logic circuit configured to:
- receive, via the communication network, a request message from a communication commander device coupled to the automotive communication network;
- generate a first code of a sequence of codes;
- fetch, from a non-volatile memory of the communication responder device, a cryptographic key and scramble the first code with the cryptographic key to generate a corresponding first scrambled code;
- send, via the communication network, a response message including the first scrambled code;
- generate a subsequent code of the sequence of codes as a function of the first code;
- receive, via the communication network, a further message including a subsequent unscrambled code from the communication commander device coupled to the automotive communication network;
- compare the subsequent unscrambled code to the subsequent code;
- in response to the subsequent unscrambled code and the subsequent code being equal, give the communication commander device access to one or more functional registers of the communication responder device; and
- in response to the subsequent unscrambled code and the subsequent code being different, deny the communication commander device access to the one or more functional registers of the communication responder device.

Optionally, the communication responder device may not include a microcontroller unit.

### Brief description of the figures

One or more embodiments will now be described, by way of example only, with reference to the annexed figures, wherein:
- Figure 1, previously presented, is a simplified scheme exemplary of an automotive communication network having a flat architecture;
- Figure 2, previously presented, is a simplified scheme exemplary of an automotive communication network having a domain-oriented architecture;
- Figures 3 and 4, previously presented, are simplified schemes exemplary of automotive communication networks having a zone-oriented architecture;
- Figure 5 is a block diagram exemplary of components of a (network-driven) smart node device for use in a communication network having a zone-oriented architecture, according to one or more embodiments of the present description;
- Figure 6 is a block diagram exemplary of the arrangement of a zonal controller, a (network-driven) smart node device and its loads in a communication network having a zone-oriented architecture, according to one or more embodiments of the present description; and
- Figure 7 is a flow diagram exemplary of operations carried out by a zonal controller and a (network-driven) smart node device to implement a secure communication procedure in a communication network having a zone-oriented architecture, according to one or more embodiments of the present description.

### Detailed description of exemplary embodiments

In the ensuing description, one or more specific details are illustrated, aimed at providing an in-depth understanding of examples of embodiments of this description. The embodiments may be obtained without one or more of the specific details, or with other methods, components, materials, etc. In other cases, known structures, materials, or operations are not illustrated or described in detail so that certain aspects of embodiments will not be obscured.

Reference to "an embodiment" or "one embodiment" in the framework of the present description is intended to indicate that a particular configuration, structure, or characteristic described in relation to the embodiment is included in at least one embodiment. Hence, phrases such as "in an embodiment" or "in one embodiment" that may be present in one or more points of the present description do not necessarily refer to one and the same embodiment. Moreover, particular configurations, structures, or characteristics may be combined in any adequate way in one or more embodiments.

The headings/references used herein are provided merely for convenience and hence do not define the extent of protection or the scope of the embodiments.

Throughout the figures annexed herein, unless the context indicates otherwise, like parts or elements are indicated with like references/numerals and a corresponding description will not be repeated for the sake of brevity.

As previously discussed with reference to Figure 2, in the current domain-oriented networks each of the ECUs 20 (e.g., the door control units) may include a respective microcontroller unit, and the communication security functions may be carried out by the microcontroller unit. With the shift of the E/E architecture towards the use of zone-oriented networks as previously discussed with reference to Figure 3, the ECUs 30 (e.g., smart nodes such as smart door modules) may not be provided with respective microcontroller units, insofar as the control logic is moved to the "intelligent" zonal gateways 32. Therefore, the communication security functions have to be implemented otherwise. As further described in the following, according to the present description the communication security functions may be carried out, on the smart node side, by a security layer integrated (e.g., incorporated) in the digital logic part of the smart nodes. Such a security layer may implement a security protocol that involves the sharing of a private key between the zonal gateway and the smart node. One or more embodiments may thus relate to the provision of a security layer (e.g., implemented as a software routine and/or as a dedicated hardware logic) in smart node applications (including, e.g., any kind of satellite modules usable in a vehicle, such as door zone modules) to prevent malicious attacks in network-driven devices. A possible example of application, which is discussed in detail in the present description, is the door zone electronics/actuation. However, one or more embodiments may be applied to other body electronics application domains of the vehicle with similar security requirements, such as a trunk module, a sunroof module, a sliding door module, and the like.

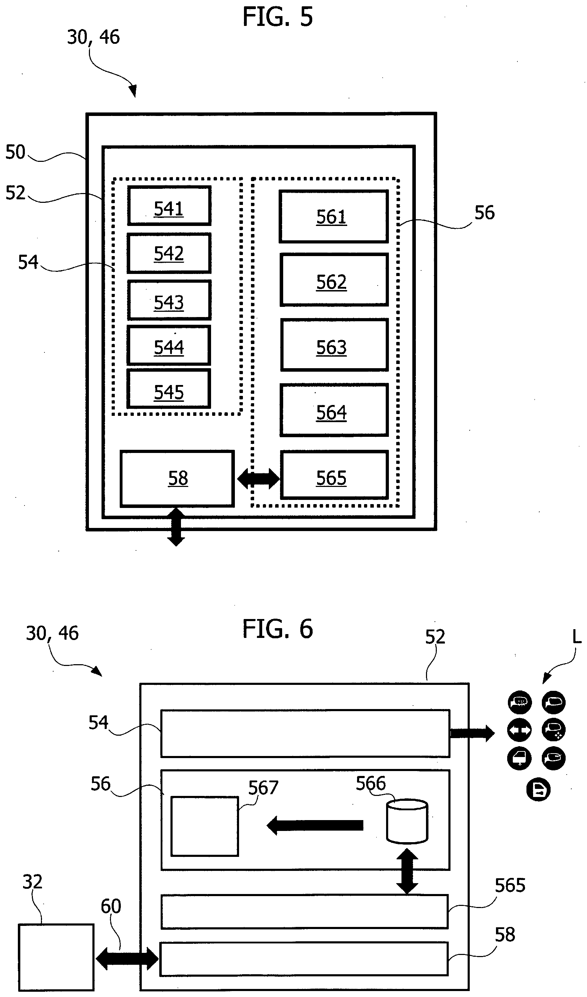

Figure 5 is a block diagram exemplary of components of a smart node device 50 (e.g., an ECU 30 or, more specifically, a door zone smart node 46) according to one or more embodiments. In particular, the smart node device 50 may be a door control unit (DCU) that includes a door zone device 52. The door zone device 52 includes a set of analog actuators 54 for driving respective loads, such as: one or more half-bridge circuits 541, one or more high-side drivers 542, one or more heater devices 543, one or more electro-chromatic devices 544, and one or more full-bridge circuits 545. The door zone device 52 includes a. digital (logic) circuit 56, which may include one or more of the following components: an input/output (I/O) interface 561, one or more voltage regulators 562, one or more SPI interfaces 563 (e.g., master/multi slave SPI interfaces) for coupling to the actuators and/or sensors, one or more CAN-to-SPI bridges 564, and a security layer 565 (e.g., implemented by a dedicated hardware logic within the digital circuit 56). In particular, the SPI interface(s) 563 and the CAN-to-SPI bridge(s) 564 may be optional in case of communication by CAN bus, insofar as in this case it may not be necessary to create an SPI interface to control digital logic. The door zone device 52 includes a CAN transceiver 58 (e.g., a CAN FD transceiver or a CAN FD Light transceiver), configured to communicate with an external zonal gateway 32 via a communication bus that implements a commander-responder communication protocol, such as a CAN FD Light protocol. The transceiver 58 may also be referred to as CAN handler (or CAN FD handler or CAN FD Light handler). In one or more embodiments, therefore, the smart nodes 30 (or 46) operate as communication responder devices, while the respective zonal gateway 32 operates as the communication commander device. The security layer 565 exchanges messages (e.g., formatted as CAN frames, such as CAN FD frames or CAN FD Light frames) with the zonal controller via the transceiver 58 to implement a security function as further discussed in the following.

Figure 6 is a block diagram exemplary of the arrangement of a zonal gateway 32, a smart node device 52 and its loads L in a communication network having a zone-oriented (network-driven) architecture, according to one or more embodiments of the present description. Substantially, in the example considered herein, the zonal gateway 32 communicates via a commander-responder bus 60 with the CAN FD Light handler 58,which exchanges data with the security layer 565, which in turn exchanges data with the digital circuit 56. In particular, the security layer 565 fetches data from and/or sends data to a non-volatile memory 566 of the digital circuit 56, which in turn exchanges data with a state machine 567 for controlling the actuation of loads L. The analog actuators 54 are coupled to respective loads L that, as exemplified in Figure 6, may include: a heater for heating a side mirror, an electrochromic glass of the side mirror, a turn indicator, a motor for adjusting the position of the side mirror, a sidewalk light integrated in the lower panel of the door, a motor for extending/retracting the side mirror, a lock of the door, and the like.

By comparing Figures 5 and 6, it will be understood that one or more embodiments may rely on a security layer 565 implemented within a digital (logic) circuit 56 of the responder device (e.g., smart node device 30) as in Figure 5, but additionally or alternatively the security layer 565 may be implemented as a separated (hardware) module provided in the responder device. Such a separate module may be configured to assess the security of the data received by the responder device from the commander device (e.g., the zonal gateway 32).

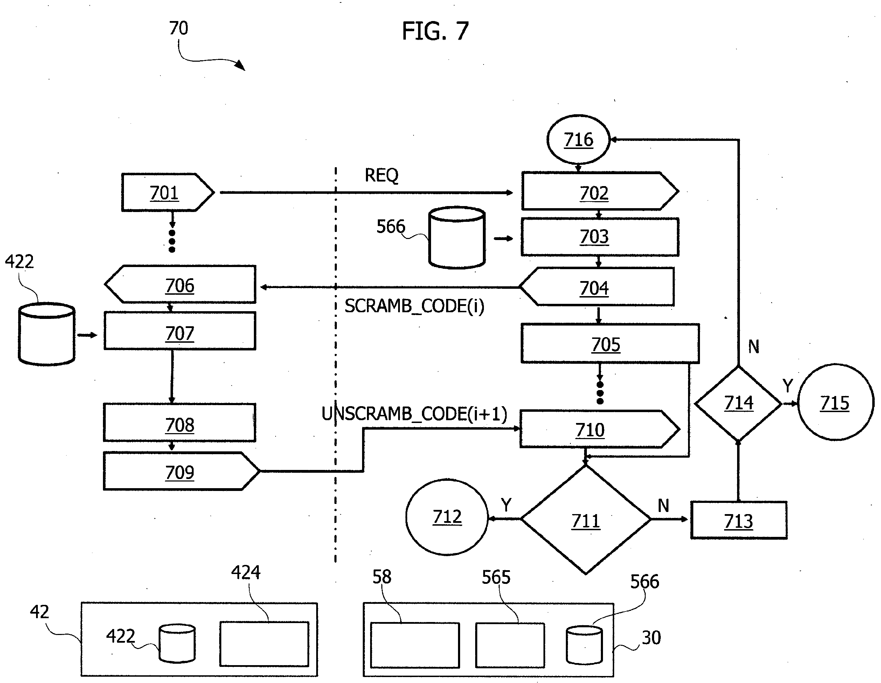

Figure 7 is a flow diagram exemplary of operations carried out by a zonal gateway (or zonal controller) 32 (in particular, by a microcontroller unit 42 thereof) and a smart node device 30 to implement a secure communication method 70 in a communication network having a zone-oriented (network-driven) architecture. In the present description, the zonal gateway 32 may be referred to as (communication) commander device, and the smart node device 30 may be referred to as (communication) responder device. In particular, the operations corresponding to the blocks that lie at the left of the vertical dash-and-dot line are implemented by the zonal gateway 32, specifically by the microcontroller unit 42 of the zonal gateway 32, which for this purpose includes a non-volatile memory (NVM) 422 and a communication commander unit 424; these operations may thus be carried out via a software routine implemented by the zonal microcontroller unit 42. On the other hand, the operations corresponding to the blocks that lie at the right of the vertical dash-and-dot line are implemented by the smart node device 30 (e.g., by a dedicated hardware logic of the smart node device 30), which for this purpose includes the non-volatile memory (NVM) 566, the security layer 565 and the communication responder unit 58 (e.g., a CAN FD Light handler).

The communication method may start with step 701, during which the commander device sends a request message (REQ - e.g., a CAN FD Light frame) over a zonal bus (e.g., a CAN FD Light bus), e.g., a communication bus that couples a certain zonal gateway to the smart nodes of the corresponding zone (of a vehicle). After sending the request message, the commander device awaits for a response message from the responder device (to which the request message is addressed).

On the other side, at step 702, the responder device receives the request message.

At step 703, upon receiving the request message, the responder device generates an i^{th} code CODE(i) (i.e., a code having generic index i) with a code generator that is configured to generate a sequence of codes (e.g., a Linear Feedback Shift Register - LFSR). Still at step 703, the responder device fetches a customer key that is stored in the non-volatile memory 566 of the responder device and uses the customer key to scramble the code just generated (e.g., by applying bitwise XOR processing to the key and the code), to produce a corresponding i^{th} scrambled code SCRAMB_CODE(i). The same customer key is also stored in the non-volatile memory 422 of the commander device.

At step 704, after having generated the scrambled code SCRAMB_CODE(i), the responder device sends a response message (e.g., a CAN FD Light frame), which includes the scrambled code SCRAMB_CODE(i), over the zonal bus so that is can be received by the commander device.

At step 705, after having generated the scrambled code SCRAMB_CODE(i), the responder device generates the subsequent (i+1)^{th} code CODE(i+1) of the sequence of codes (i.e., a code having generic index i+1) with the sequential code generator. The responder device awaits for a further message from the commander device.

On the other side, at step 706, the commander device receives from the responder device the response message containing the i^{th} scrambled code SCRAMB_CODE(i).

At step 707, upon receiving the response message, the commander device de-scrambles the received scrambled code SCRAMB_CODE(i) using the same customer key used by the responder device at step 703 (i.e., fetching the customer key from its non-volatile memory 422), thus producing the i^{th} unscrambled code UNSCRAMB_CODE(i) that - in normal operating conditions - is expected to be equal to the code CODE(i) generated at step 703 by the responder device.

At step 708, after having reconstructed the i^{th} unscrambled code UNSCRAMB_CODE(i), the commander device generates the subsequent (i+1)^{th} code UNSCRAMB_CODE(i+1) of the sequence of codes (i.e., the code having generic index i+1) with a sequential code generator. The sequential code generator implemented in the commander device is identical to the sequential code generator implemented in the responder device (or at least, it implements the same code generation rules), so that - in normal operating conditions - the code UNSCRAMB_CODE(i+1) generated at step 708 by the commander device is expected to be equal to the code CODE(i+1) generated at step 705 by the responder device.

At step 709, after having generated the code UNSCRAMB_CODE(i+1), the commander device sends a message (e.g., a CAN FD Light frame), which includes the code UNSCRAMB_CODE(i+1), over the zonal bus so that is can be received by the responder device.

On the other side, at step 710, the responder device receives the message that includes the code UNSCRAMB_CODE(i+1).

At step 711, the responder device compares the code UNSCRAMB_CODE(i+1) received from the commander device to the code CODE(i+1) generated at step 705 by the responder device. It will be noted that, in an alternative sequence, the code CODE(i+1) could be generated by the responder device even after having received the code UNSCRAMB_CODE(i+1) from the commander device.

If the codes UNSCRAMB_CODE(i+1) and CODE(i+1) are equal (e.g., matched - positive outcome, Y, of step 711), the communication established with the commander device is identified as a legitimate one and the responder device gives access to its functional registers to the commander device at step 712. The functional registers of the responder device can thus be read and/or written by the commander device with further messages exchanged over the zonal network.

If the codes UNSCRAMB_CODE(i+1) and CODE(i+1) are not equal (e.g., unmatched - negative outcome, N, of step 711), the communication established with the commander device is not identified as a legitimate one and the responder device does not give access to its functional registers to the commander device at step 713. Furthermore, still at step 713, the responder device may increase the count value of an error counter that keeps tracks of the number of failed communication attempts.

At step 714, the responder device may check whether the count value of the error counter has reached a threshold value M.

If the count value is equal to the threshold value M (positive outcome, Y, of step 714), the responder device may switch at step 715 to an operating state where it does not accept any new access requests (e.g., access requests received at step 702 are automatically denied).

If the count value is lower than the threshold value M (negative outcome, N, of step 714), the responder device may switch at step 716 to an operating state where it waits for further access requests from the commander device.

Depending on the timing constraints of the commander-responder communication, different embodiments may rely on different solutions for implementing the safe communication procedure 70 disclosed with reference to Figure 7. For instance, in one or more embodiments the communication procedure 70 may substantially amount to a handshake procedure that is carried out once at the beginning of the communication and enables to establish a long-lasting communication between the commander device (e.g., zonal gateway) and the responder device (e.g., smart node device). Additionally, or alternatively, the communication procedure 70 may be carried out periodically during the communication (e.g., every N exchanged frames, with N being an integer value ranging, e.g., from some units to some tens). For instance, the communication procedure 70 could be carried out even at each frame sent by the commander device to the responder device.

Therefore, one or more embodiments may relate to a security layer integrated within a smart node device of a module, which is designed to communicate with a zonal gateway (or zonal controller) without relying on any microcontroller unit in the smart node itself (so-called "MCU-less smart node"). This may be the case, for instance, in certain applications that provide the possibility to remotely control motors, lighting devices and/or generic loads via a same satellite device (same satellite IC), with the majority of the control logic (i.e., the "intelligence") served via the network. The security layer relies on a smart physical layer protocol with integrated protocol handler (from any network to, e.g., SPI). When the smart node device receives an actuation request (e.g., in the form of a CAN FD Light frame), the security layer may act as a (further) barrier against malicious users who might try to breach (e.g., hack) the zonal network and send malicious frames to remotely control the actuators that are present in the area served by the zonal network (e.g., a door of a vehicle).

One or more embodiments may thus provide one or more of the following advantages:
- possibility to secure the communication of smart nodes in new network-driven E/E architectures for zonal topologies;
- possibility to secure the communication of MCU-less smartnodes;
- lower area and lower power consumption of each smart node; and
- possibility to activate dedicated device profiles as a device personalization.

Without prejudice to the underlying principles, the details and embodiments may vary, even significantly, with respect to what has been described by way of example only, without departing from the extent of protection.

The extent of protection is determined by the annexed claims.

## Claims

1. A method of operating electronic devices (30, 32) in an automotive communication network, wherein the communication network comprises a communication commander device (32) and at least one communication responder device (30), the method comprising:
sending (701) a request message (REQ) from the communication commander device (32) via said communication network, wherein said request message (REQ) is addressed to a selected communication responder device (30);
receiving (702) said request message (REQ) at said selected communication responder device (30);
generating (703), with a sequential code generator of said selected communication responder device (30), a first code (CODE(i)) of a sequence of codes;
fetching (703), from a non-volatile memory (566) of said selected communication responder device (30), a first cryptographic key and scrambling (703), with a scrambler circuit of said selected communication responder device (30), said first code (CODE(i)) with said first cryptographic key to generate a corresponding first scrambled code (SCRAMB_CODE(i));
sending (704) a response message including said first scrambled code (SCRAMB_CODE(i)) from the selected communication responder device (30) to the communication commander device (32);
generating (705), with said sequential code generator of said selected communication responder device (30), a subsequent code (CODE(i+1)) of said sequence of codes as a function of said first code (CODE(i));
receiving (706) said response message at said communication commander device (32);
fetching (707), from a non-volatile memory (422) of said communication commander device (32), a second cryptographic key equal to said first cryptographic key and de-scrambling (707), with a scrambler circuit of said communication commander device (32), said first scrambled code (SCRAMB_CODE(i)) with said second cryptographic key to generate a corresponding first unscrambled code (UNSCRAMB_CODE(i));
generating (708), with a sequential code generator of said communication commander device (32), a subsequent unscrambled code (UNSCRAMB_CODE(i+1)) of said sequence of codes as a function of said first unscrambled code (UNSCRAMB_CODE(i)), wherein the sequential code generator of the communication commander device (32) implements the same code generation rules of the sequential code generator of the selected communication responder device (30);
sending (709) a further message including said subsequent unscrambled code (UNSCRAMB_CODE(i+1)) from the communication commander device (32) to the selected communication responder device (30);
receiving (710) said further message at said selected communication responder device (30);
comparing (711), at said selected communication responder device (30), said subsequent unscrambled code (UNSCRAMB_CODE(i+1)) to said subsequent code (CODE (i+1));
in response to said subsequent unscrambled code (UNSCRAMB_CODE(i+1)) and said subsequent code (CODE(i+1)) being equal, giving (712) the communication commander device (32) access to one or more functional registers of the selected communication responder device (30); and
in response to said subsequent unscrambled code (UNSCRAMB_CODE(i+1)) and said subsequent code (CODE(i+1)) being different, denying (713) the communication commander device (32) access to said one or more functional registers of the communication responder device (30).

2. The method of claim 1, further comprising increasing (713) the count value of an error counter of said selected communication responder device (30) in response to said subsequent unscrambled code (UNSCRAMB_CODE(i+1)) and said subsequent code (CODE(i+1)) being different.

3. The method of claim 2, further comprising checking (714) whether the count value of said error counter reaches a threshold value and, in the affirmative case, switching operation (715) of said selected communication responder device (30) to a state where the selected communication responder device (30) does not accept incoming request messages.

4. The method of any of the previous claims, wherein the method is carried out once as a handshake procedure at the start of communication between said communication commander device (32) and said selected communication responder device (30).

5. The method of any of the previous claims, wherein the method is carried out periodically during communication between said communication commander device (32) and said selected communication responder device (30).

6. The method of any of the previous claims, wherein said automotive communication network is configured to operate according to a CAN protocol, preferably a CAN FD protocol or a CAN FD Light protocol, and wherein the messages exchanged over the automotive communication network are formatted according to a CAN message format, preferably a CAN FD message format or a CAN FD Light message format.

7. The method of any of the previous claims, wherein the method steps carried out by said communication commander device (32) are executed by a microcontroller unit (42) of the communication commander device (32), and the method steps carried out by said selected communication responder device (30) are executed by a hardware logic circuit (565) of the selected communication responder device (30).

8. A communication commander device (32) configured for coupling to an automotive communication network, the communication commander device (32) comprising a microcontroller unit (42) configured to:
send (701), via said communication network, a request message (REQ) addressed to a selected communication responder device (30) coupled to the automotive communication network;
receive (706), via said communication network, a response message generated by said selected communication responder device (30), the response message including a first scrambled code (SCRAMB_CODE(i));
fetch (707), from a non-volatile memory (422) of the communication commander device (32), a cryptographic key and de-scramble (707) said first scrambled code (SCRAMB_CODE(i)) with said cryptographic key to generate a corresponding first unscrambled code (UNSCRAMB_CODE(i));
generate (708) a subsequent unscrambled code (UNSCRAMB_CODE(i+1)) as a function of said first unscrambled code (UNSCRAMB_CODE(i)); and
send (709) a further message including said subsequent unscrambled code (UNSCRAMB_CODE(i+1)) to the selected communication responder device (30).

9. A communication responder device (30) configured for coupling to an automotive communication network, the communication responder device (30) comprising a hardware logic circuit (565) configured to:
receive (702), via said communication network, a request message (REQ) from a communication commander device (32) coupled to the automotive communication network;
generate (703) a first code (CODE(i)) of a sequence of codes;
fetch (703), from a non-volatile memory (566) of the communication responder device (30), a cryptographic key and scramble (703) said first code (CODE(i)) with said cryptographic key to generate a corresponding first scrambled code (SCRAMB_CODE(i));
send (704), via said communication network, a response message including said first scrambled code (SCRAMB_CODE(i));
generate (705) a subsequent code (CODE(i+1)) of said sequence of codes as a function of said first code (CODE(i));
receive (710), via said communication network, a further message including a subsequent unscrambled code (UNSCRAMB_CODE(i+1)) from the communication commander device (32) coupled to the automotive communication network;
compare (711) said subsequent unscrambled code (UNSCRAMB_CODE(i+1)) to said subsequent code (CODE(i+1));
in response to said subsequent unscrambled code (UNSCRAMB_CODE(i+1)) and said subsequent code (CODE(i+1)) being equal, give (712) the communication commander device (32) access to one or more functional registers of the communication responder device (30); and
in response to said subsequent unscrambled code (UNSCRAMB_CODE(i+1)) and said subsequent code (CODE(i+1)) being different, deny (713) the communication commander device (32) access to said one or more functional registers of the communication responder device (30).

10. The communication responder device (30) of claim 9, wherein the communication responder device (30) does not comprise a microcontroller unit.
